# EUROPÄISCHE PATENTSCHRIFT

(11) **EP 3 578 952 B1**
(45) Veröffentlichungstag und Bekanntmachung des Hinweises auf die Patenterteilung: **03.11.2021**
(21) Anmeldenummer: 18176161.0
(22) Anmeldetag: 05.06.2018
(51) Int. Cl.: G01N 1/24, B23Q 11/00, B23Q 17/09, G01N 15/00

(54) **VORRICHTUNG ZUM ABSAUGEN VON PARTIKELN AN EINEM WERKZEUG MIT INTEGRIERTER SENSORIK**
APPARATUS FOR ASPIRATING PARTICLES ON A TOOL WITH INTEGRATED SENSORS
DISPOSITIF POUR ASPIRER DES PARTICULES D'UN OUTIL AVEC DES CAPTEURS INTÉGRÉS

(43) Veröffentlichungstag der Anmeldung: 11.12.2019
(73) Patentinhaber: Schlageter, Klaus, 78727 Oberndorf (DE)
(72) Erfinder: Schlageter, Klaus, 78727 Oberndorf (DE)
(74) Vertreter: Meyer zu Bexten, Elmar

(56) Entgegenhaltungen:
- DE-A1-102014 224 570
- DE-A1-102015 220 533
- SEAVER M ET AL: "strain measurements from FBG's embedded in rotating composite propeller blades", PROCEEDINGS OF OSA/OFS 2006,, 23. Oktober 2006 (2006-10-23), Seiten THD2-1, XP002512784,
- DIOGO SILVA ET AL: "Measuring Torque and Temperature in a Rotating Shaft Using Commercial SAW Sensors", SENSORS, Bd. 17, Nr. 7, 2. Juli 2017 (2017-07-02), Seite 1547, XP055528632, DOI: 10.3390/s17071547

## Beschreibung

### Stand der Technik

Die Erfindung geht aus von einer Vorrichtung zum Absaugen von Partikeln an einem Werkzeug oder einem Verfahren zur Erfassung von Betriebsparametern eines Werkzeugs nach Gattung der unabhängigen Ansprüche.

Aus der EP1940585B1 ist bereits eine Betriebsgruppe zum Ätzen und/oder Schneiden von Gegenständen mit einem Werkzeug bekannt. Dabei werden durch eine Sogwirkung eines Flügelrads staubförmige Abfälle beim Ätzen oder Schneiden entfernt.

Ferner ist aus der EP2422925B1 eine Abführeinrichtung zum Abführen von Partikeln an einem Werkzeug bekannt. Dabei ist ein Flügelrad eingerichtet, mittels einer Luftströmung Partikel abzuführen. Ein vorgeschalteter Abscheider scheidet Partikel aus der Luft vor dem Passieren des Flügelrads ab.

Ferner sind aus der DE102015005718A1 ein Werkzeughalter mit einer Überwachungsanordnung und einer Sensoreinheit zur Erfassung von Werkzeughalter-Betriebsparametern und aus der DE102015220533A1 ein Werkzeughalter mit integrierter Sensorik zur Erfassung von dem Betrieb des Werkzeughalters betreffenden Daten bekannt.

DE 10 2014 224570 A1 offenbart eine Vorrichtung (32) zum Absaugen von Partikeln an einem Werkzeug (30), wobei die Vorrichtung (32) ein Flügelrad (52) aufweist, das ausgelegt ist, einen Luftstrom zum Absaugen von Partikeln zu erzeugen, die beim Betrieb des Werkzeugs (30) entstehen, wobei das Flügelrad (52) koaxial zum Schaft (42) des Werkzeugs (30) anbringbar ist (siehe Absatz [0026]), wobei die Vorrichtung (32) eine Messvorrichtung (14) mit mindestens einen Sensor (16) zur Erfassung von Betriebsparametern des Werkzeugs (30) aufweist.

SEAVER MET AL: "strain measurements from FBGs embedded in rotating composite propeller blades", PROCEEDINGS OF OSA/OFS 2006, 23. Oktober 2006 (2006-10-23), Seiten TH D2-1, XP002512784 beschreibt die Bemühungen der Autoren, Arrays von Faser-Bragg-Gitter-Sensoren in Verbundpropellerblätter einzubetten und die dynamischen Beanspruchungen aufzuzeichnen, die diese Blätter während des Wassertunnel-Tests erfahren. Die Ergebnisse zeigen große Dehnungsänderungen, die von der Position der Blätter in einem instationären Strömungsfeld abhängen, und die Abhängigkeit dieser Dehnungen vom Abstand entlang der Mittelsehne der Klingen.

Eine auf einer Drehwelle montierte Wägezelle mit Sensoren wird beschrieben in DIOGO SILVA ET AL: "Measuring Torque and Temperature in a Rotating Shaft Using Commercial SAW Sensors", SENSORS, Bd. 17, Nr. 7, 2. Juli 2017 (2017-07-02), Seite 1547, XP055528632, DOI: 10.3390/s17071547.

### Offenbarung der Erfindung

### Vorteile der Erfindung

Die erfindungsgemäße Vorrichtung zum Absaugen von Partikeln an einem Werkzeug mit den Merkmalen des unabhängigen Anspruchs hat demgegenüber den Vorteil, dass durch einen selbstzentrierenden Sitz ein Austausch der Messvorrichtung ohne nachträgliches Wuchten möglich ist. Dazu weist die Vorrichtung an der Außenseite eine konische Form und die konische Form einen Kontakt zwischen Messvorrichtung und dem Flügelrad auf.

Durch die in den abhängigen Ansprüchen aufgeführten Maßnahmen sind vorteilhafte Weiterbildungen und Verbesserungen der in den unabhängigen Ansprüchen angegebenen Vorrichtung möglich.

Es ist vorteilhaft, wenn der Sensor ein Temperatursensor, ein Vibrationssensor, ein Luftfeuchtigkeitssensor, elektrostatischer Sensor, Lichtsensor oder ein Bildsensor ist. Denn so können Änderungen in der Luft unmittelbar am Werkzeug, Anomalien durch Vibrationen am Werkzeug, und/oder eine Trübung im Luftstrom erkannt werden, die auf Verstopfungen der Absaugung durch Partikeln, wie beispielsweise Späne, hinweisen. Beispielsweise deutet eine Erhöhung der Luftfeuchtigkeit bei Holzspänen auf eine Einschränkung der Absaugfähigkeit hin. Beispielsweise kann ein elektrostatischer Sensor messen, ob eine erhöhte Aufladung am Werkzeug anliegt.

Zweckmäßiger Weise weist die Vorrichtung eine Spannungsquelle auf, die am Flügelrad oder der Messvorrichtung angeordnet ist. Damit wird die Energieversorgung der Messvorrichtung gewährleistet.

Vorteilhaft ist es, wenn die Spannungsquelle ein Akkumulator, eine Solarzelle oder ein Piezoelement ist. Damit ergibt sich die Möglichkeit des Energy Harvesting.

Ferner ist es vorteilhaft, wenn die Vorrichtung einen Kanal zur Führung eines Luftstroms entlang des Sensors aufweist. Auf diese Weise wird der Luftstrom direkt vom Werkzeug an den Sensor ohne Vermischung mit Umgebungsluft geleitet, so dass beispielsweise Temperaturänderungen am Werkzeug schnell erfasst werden, ohne dass das Werkzeug modifiziert werden muss.

Zweckmäßiger Weise weist die Messvorrichtung Bohrungen für Schrauben zur Befestigung an das Flügelrad auf, so dass die Messvorrichtung an das Flügelrad mit Schrauben oder zentrischen Gewinde mit Anzug und Drehmomentschlüssel gesichert werden kann.

Ferner ist es vorteilhaft, wenn die Messvorrichtung mehrere gleichförmige Sensoren im gleichen Abstand zueinander aufweist. Dadurch wird eine gleichmäßige Massenverteilung erreicht und somit das Wuchten vereinfacht. Zudem wird die Verfügbarkeit bei Ausfall eines Sensors durch Redundanz verbessert.

Es ist vorteilhaft, wenn die Messvorrichtung eine mit dem Sensor verbundene Antenne aufweist. Dadurch können Sensorwerte funkbasiert versendet werden.

Zudem ist es vorteilhaft, wenn die mit dem Sensor verbundene Antenne in der Messvorrichtung derart angeordnet ist, dass die Antenne mindestens an drei Seiten ein Radiowellen gering dämpfendes Medium aufweist. Dadurch kann ein von der Antenne ausgesendetes Funksignal mit nur geringen Signalverlust aus der Messvorrichtung gelangen.

### Kurze Beschreibung der Zeichnungen

Ausführungsbeispiele der Erfindung sind in den Zeichnungen dargestellt und in der nachfolgenden Beschreibung näher erläutert.

Es zeigen
Figur 1 eine perspektivische, schematische Darstellung einer Ausführungsform einer erfindungsgemäßen Vorrichtung zum Absaugen von Partikeln an einem Werkzeug mit einer Messvorrichtung;
Figur 2 einen Querschnitt durch eine weitere Ausführungsform der erfindungsgemäßen Vorrichtung zum Absaugen von Partikeln an einem Werkzeug mit einer Messvorrichtung;
Figur 3 einen Querschnitt durch die Messvorrichtung aus Figur 2;
Figur 4 einen Ausschnitt aus dem Querschnitt der Messvorrichtung aus Figur 3;
Figur 5 eine perspektivische, schematische Darstellung einer Messvorrichtung einer Ausführungsform der erfindungsgemäßen Vorrichtung; und
Figur 6 eine Sicht auf die Unterseite der Messvorrichtung aus Figur 5.

### Ausführungsformen der Erfindung

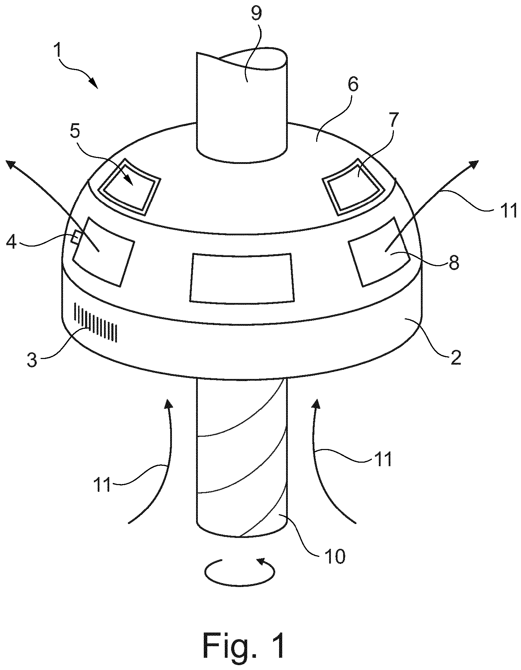

Figur 1 zeigt eine schematische Darstellung einer Ausführungsform 1 einer erfindungsgemäßen Vorrichtung zum Absaugen von Partikeln. Die erste Ausführungsform 1 weist eine Messvorrichtung 2, ein Flügelrad 8, einen Sensor 3, eine Piezoelement 4, einen Akkumulator 5 und eine Solarzelle 7 auf. Das Flügelrad 8 und die Messvorrichtung 2 sind koaxial zu einem Schaft 9 eines Werkzeugs 10 angebracht. Der Akkumulator 5 und die Solarzelle 7 sind auf einer Oberseite 6 des Flügelrads 8 angeordnet. Zudem ist ein Luftstrom 11 dargestellt, der durch das Flügelrad 8 und die Messvorrichtung 2 strömt. Das Werkzeug 10 kann links herum, wie dargestellt, oder rechts herum um seine Rotationsachse drehen. Der Sensor 3 ist innerhalb der Messvorrichtung 2 angeordnet.

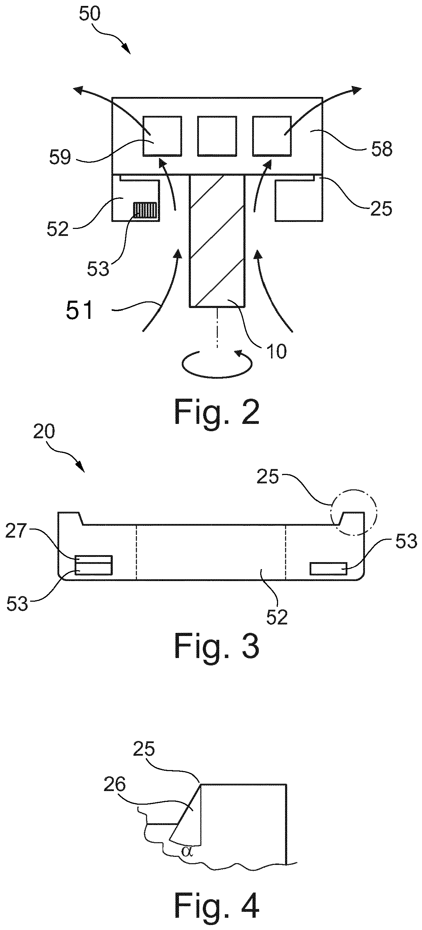

Figur 2 zeigt eine weitere Ausführungsform 50 einer erfindungsgemäßen Vorrichtung im Querschnitt. Die zweite Ausführungsform 50 weist ein Flügelrad 58 mit einer Öffnung 59, eine Messvorrichtung 52 und einen Sensor 53 auf. Die Messvorrichtung 52 weist einen Durchgang auf. Der Durchgang ist innenseitig zum Werkzeug angeordnet. Ein Luftstrom 51 wird durch die Messvorrichtung 52, an dem Sensor 53 vorbei und die Öffnung 59 im Flügelrad geleitet. Das Flügelrad 58 und die Messvorrichtung 52 sind koaxial am Werkzeug 10 angebracht. Die Außenseite der Messvorrichtung 52 weist eine konische Form 25 auf. Die Messvorrichtung 52 kontaktiert das Flügelrad 58 mit einer Spitze der konischen Form 25. Der Sensor 53 ist an einer Innenseite der Messvorrichtung 52 hin zu dem Durchgang angeordnet. Der Sensor 53 ist derart angeordnet, dass dieser an drei Seiten offen liegt.

Das Flügelrad 58 ist beispielsweise eine Turbine.

Figur 3 zeigt die Messvorrichtung 52 losgelöst von dem Flügelrad 58. Die Messvorrichtung 52 weist Sensoren 53, einen Akkumulator 27 und die konische Form 25 auf.

Figur 4 zeigt die konische Form 25 in einem Ausschnitt aus dem Querschnitt der Messvorrichtung 52 aus Figur 3. Die konische Form 25 ergibt sich aus einer in der Figur 4 oben dargestellten Kontaktoberfläche und einem Winkel 26, der eine Neigung einer nach innen abfallenden Fläche bestimmt.

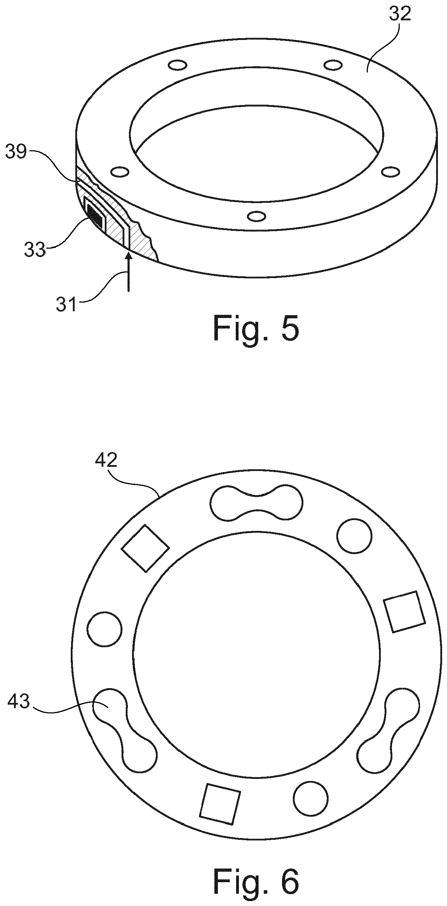

Figur 5 zeigt eine perspektivische, schematische Darstellung einer Messvorrichtung 32 einer Ausführungsform der erfindungsgemäßen Vorrichtung. Die Messvorrichtung 32 weist einen Sensor 33, einen Kanal 39, durch den ein Luftstrom 31 geleitet wird, auf.

Figur 6 zeigt eine Sicht auf die Unterseite 42 der Messvorrichtung 32 aus Figur 5. Die Messvorrichtung weist mehrere gleichförmige Sensoren 43 auf. Die Sensoren 43 sind in einem gleichen Abstand auf der Messvorrichtung angeordnet.

Die Messvorrichtung 2, 32, 52 weist beispielsweise neben dem Sensor 3, 33, 43, 53 eine Datenverarbeitungseinheit, eine Funkeinheit, und/oder eine Speichereinheit auf. Beispielsweise ist die Datenverarbeitungseinheit ein Mikrocontroller; beispielsweise ist die Funkeinheit ein Bluetooth-Sende/Empfangsmodul mit einer Antenne.

Der Sensor 3, 33, 43, 53 ist beispielsweise ein Temperatursensor, ein Vibrationssensor, ein Luftfeuchtigkeitssensor, ein elektrostatischer Sensor, ein Lichtsensor oder ein Bildsensor. Der Lichtsensor ist beispielsweise eine Photozelle oder Infrarot-Sensor. Der Bildsensor ist beispielsweise ein CMOS oder CCD-Sensor.

Der Sensor 3, 33, 43, 53 kann beispielsweise hochkant, quer oder längs in der Messvorrichtung 2, 32, 52 angeordnet sein. Beispielsweise ist der Sensor 3, 33, 43, 53 mit einer Antenne verbunden und die Antenne ist mindestens an drei Seiten in dem Medium Luft oder in dem Medium Kunststoff oder in einem anderen ein Funksignal gering dämpfenden Material. Ein Funksignal gering dämpfendes Material hat beispielsweise eine Dämpfung von 0% bis 10%.

Die mit der Messvorrichtung 2, 32, 52 über den Sensor 3, 33, 43, 53 erfassten Daten der Betriebsparameter sind beispielsweise Temperatur und Feuchte des Luftstroms 11, 31, 51 oder Fotoaufnahmen des sich im Betrieb befindlichen Werkzeugs 10 oder eines damit bearbeiteten Materials.

Ein Verfahren zur Erfassung von Betriebsparametern des Werkzeugs 10 versetzt das Werkzeug 10 in einem ersten Verfahrensschritt in Betrieb, so dass das Werkzeug 10 entlang der für den Betrieb ausgelegten Rotationsachse rotiert. In einem zweiten Verfahrensschritt wird ein Luftstrom 11, 31, 51 an dem rotierenden Werkzeug 10 vorbeigeführt. In einem dritten Verfahrensschritt wird ein Luftstrom 11, 31, 51 erzeugt, der Luftstrom 11, 31, 51 an dem rotierenden Werkzeug 10 vorbeigeführt und ein Sensor 3, 33, 43, 53 koaxial um das Werkzeug 10 rotiert. In einem weiteren Verfahrensschritt erfasst der Sensor 3, 33, 43, 53 einen physikalischen Wert. Der Wert wird in einem weiteren Verfahrensschritt ausgewertet, um einen Betriebsparameter des Werkzeugs 10 zu ermitteln.

Beispielsweise wird der Luftstrom 11, 31, 51 mittels festinstallierter, außenliegender Pressluft erzeugt. Beispielsweise wird der Luftstrom 11, 31, 51 durch Anblasen an des Werkzeug 10 in Richtung des Sensors 3, 33, 43, 53 vorbeigeführt. Beispielsweise hat der Luftstrom 11, 31, 51 eine Luftgeschwindigkeit von größer 40m/s.

Beispielsweise ist der Betriebsparameter ein Temperaturwert der Temperatur des Luftstroms 11, 31, 51 und wird hinsichtlich einer Anpassung einer Drehzahl der Rotation des Werkzeugs 10 ausgewertet, um eine Überhitzung des Werkzeugs 10 zu vermeiden.

## Patentansprüche

1. Vorrichtung (1, 50) zum Absaugen von Partikeln an einem Werkzeug (10), wobei die Vorrichtung (1, 50) eine Messvorrichtung (2, 32, 52) mit mindestens einem Sensor (3, 33, 43, 53) zur Erfassung von Betriebsparametern des Werkzeugs (10) und ein Flügelrad (8, 58) aufweist, das ausgelegt ist, einen Luftstrom (11, 31, 51) zum Absaugen von Partikeln zu erzeugen, die beim Betrieb des Werkzeugs (10) entstehen, wobei das Flügelrad (8, 58) koaxial zum Schaft (9) des Werkzeugs (10) anbringbar ist, **dadurch gekennzeichnet, dass** die Messvorrichtung (2, 32, 52) an das Flügelrad (8, 58) anbringbar ist, wobei die Messvorrichtung (2, 32, 52) an einer Außenseite eine konische Form (25) und die konische Form (25) einen Kontakt zwischen der Messvorrichtung (2, 32, 52) und dem Flügelrad (8, 58) aufweist.

2. Vorrichtung (1, 50) nach Anspruch 1, **dadurch gekennzeichnet, dass** der Sensor (3, 33, 43, 53) ein Temperatursensor, ein Vibrationssensor, ein Luftfeuchtigkeitssensor, ein elektrostatischer Sensor, ein Lichtsensor oder ein Bildsensor ist.

3. Vorrichtung (1, 50) nach Anspruch 1, **dadurch gekennzeichnet, dass** an dem Flügelrad (8, 58) oder der Messvorrichtung (2, 32, 52) eine Spannungsquelle (4, 5, 7, 27) angeordnet ist.

4. Vorrichtung (1, 50) nach Anspruch 3, **dadurch gekennzeichnet, dass** die Spannungsquelle (4, 5, 7, 27) ein Akkumulator, eine Solarzelle oder ein Piezoelement ist.

5. Vorrichtung (1, 50) nach Anspruch 1, **dadurch gekennzeichnet, dass** die Vorrichtung (1, 50) einen Kanal (39, 59) zur Führung eines Luftstroms (11, 31, 51) entlang des Sensors (3, 33, 43, 53) aufweist.

6. Vorrichtung (1, 50) nach Anspruch 1, **dadurch gekennzeichnet, dass** die Messvorrichtung (2, 32, 52) Bohrrungen für Schrauben zur Befestigung an das Flügelrad (8, 58) aufweist.

7. Vorrichtung (1, 50) nach Anspruch 1, **dadurch gekennzeichnet, dass** die Messvorrichtung (2, 32, 52) mehrere gleichförmige Sensoren (3, 33, 43, 53) im gleichen Abstand zueinander aufweist.

8. Vorrichtung (1, 50) nach Anspruch 1, **dadurch gekennzeichnet, dass** die Messvorrichtung (2, 32, 52) eine mit dem Sensor (3, 33, 43, 53) verbundene Antenne aufweist.

9. Vorrichtung (1, 50) nach Anspruch 8, **dadurch gekennzeichnet, dass** die mit dem Sensor (3, 33, 43, 53) verbundene Antenne in der Messvorrichtung (2, 32, 52) derart angeordnet ist, dass die Antenne mindestens an drei Seiten ein Radiowellen gering dämpfendes Medium aufweist.

## Claims

1. Device (1, 50) for aspirating particles from a tool (10), the device (1, 50) comprising a measuring device (2, 32, 52) with at least one sensor (3, 33, 43, 53) for detecting operating parameters of the tool (10) and an impeller (8, 58) adapted to generate an air flow (11, 31, 51) for aspirating particles generated during operation of the tool (10), wherein the impeller (8, 58) can be mounted coaxially to the shaft (9) of the tool (10), **characterized in that** the measuring device (2, 32, 52) can be fixed to the impeller (8, 58) and has a conical shape (25) on an outer side and the conical shape (25) has a contact between the measuring device (2, 32, 52) and the impeller (8, 58).

2. Device (1, 50) according to claim 1, **characterized in that** the sensor (3, 33, 43, 53) is a temperature sensor, a vibration sensor, an air humidity sensor, an electrostatic sensor, a light sensor, or an image sensor.

3. Device (1, 50) according to claim 1, **characterized in that** a voltage source (4, 5, 7, 27) is arranged on the impeller (8, 58) or the measuring device (2, 32, 52).

4. Device (1, 50) according to claim 3, **characterized in that** the voltage source (4, 5, 7, 27) is an accumulator, a solar cell, or a piezo element.

5. Device (1, 50) according to claim 1 comprising a channel (39, 59) for guiding an air flow (11, 31, 51) along the sensor (3, 33, 43, 53).

6. Device (1, 50) according to claim 1, **characterized in that** the measuring device (2, 32, 52) has bore holes for screws for fastening to the impeller (8, 58).

7. Device (1, 50) according to claim 1, **characterized in that** the measuring device (2, 32, 52) has several uniform and evenly spaced sensors (3, 33, 43, 53).

8. Device (1, 50) according to claim 1, **characterized in that** the measuring device (2, 32, 52) has an antenna connected to the sensor (3, 33, 43, 53).

9. Device (1, 50) according to claim 8, **characterized in that** the antenna connected to the sensor (3, 33, 43, 53) is arranged within the measuring device (2, 32, 52) such that the antenna has a medium with low attenuation of radio waves on at least three sides.

## Revendications

1. Dispositif (1, 50) pour extraire des particules d'un outil (10), le dispositif (1, 50) comprenant un dispositif de mesure (2, 32, 52) avec au moins un capteur (3, 33, 43, 53) pour détecter des paramètres de fonctionnement de l'outil (10) et une roue à aubes (8, 58) qui est conçue pour générer un flux d'air (11, 31, 51) pour extraire les particules générées pendant le fonctionnement de l'outil (10), dans lequel la roue (8, 58) peut être montée coaxialement à l'arbre (9) de l'outil (10), **caractérisé en ce que** le dispositif de mesure (2, 32, 52) peut être monté sur la roue (8, 58) et présente une forme conique (25) sur un côté extérieur, la forme conique (25) ayant un contact entre le dispositif de mesure (2, 32, 52) et la roue (8, 58).

2. Dispositif (1, 50) selon la revendication 1, **caractérisé en ce que** le capteur (3, 33, 43, 53) est un capteur de température, un capteur de vibration, un capteur d'humidité de l'air, un capteur électrostatique, un capteur de lumière ou un capteur d'image.

3. Dispositif (1, 50) selon la revendication 1, **caractérisé en ce qu'**une source de tension (4, 5, 7, 27) est disposée sur la roue à aubes (8, 58) ou sur le dispositif de mesure (2, 32, 52).

4. Dispositif (1, 50) selon la revendication 3, **caractérisé en ce que** la source de tension (4, 5, 7, 27) est un accumulateur, une cellule solaire ou un élément piézoélectrique.

5. Dispositif (1, 50) selon la revendication 1, **caractérisé par** un canal (39, 59) pour guider un flux d'air (11, 31, 51) le long du capteur (3, 33, 43, 53).

6. Dispositif (1, 50) selon la revendication 1, **caractérisé en ce que** le dispositif de mesure (2, 32, 52) présente des trous pour des vis à fixer sur la roue (8, 58).

7. Dispositif (1, 50) selon la revendication 1, **caractérisé en ce que** le dispositif de mesure (2, 32, 52) comporte une pluralité de capteurs uniformes (3, 33, 43, 53) à une distance égale les uns des autres.

8. Dispositif (1, 50) selon la revendication 1, **caractérisé en ce que** le dispositif de mesure (2, 32, 52) possède une antenne reliée au capteur (3, 33, 43, 53).

9. Dispositif (1, 50) selon la revendication 8, **caractérisé en ce que** l'antenne reliée au capteur (3, 33, 43, 53) est disposée dans le dispositif de mesure (2, 32, 52) de telle manière que l'antenne présente un milieu à faible atténuation des ondes radio sur au moins trois côtés.
